(19) Europäisches Patentamt

European Patent Office

Office européen des brevets

(11) Publication number: **0 239 761 B1**

(12) **EUROPEAN PATENT SPECIFICATION**

(45) Date of publication of patent specification :
**17.07.91 Bulletin 91/29**

(21) Application number: **87102103.6**

(22) Date of filing: **14.02.87**

(51) Int. Cl.⁵: **A01F 15/14, A01F 15/08**

(54) **Machine for forming cylindrical bales of crop.**

(30) Priority: 05.03.86 GB 8605466
02.02.87 GB 8702292

(43) Date of publication of application:
07.10.87 Bulletin 87/41

(45) Publication of the grant of the patent:
17.07.91 Bulletin 91/29

(84) Designated Contracting States:
DE ES FR GB IT NL

(56) References cited:
DE-A- 3 418 681
DE-C- 3 322 024
FR-A- 2 239 188

(73) Proprietor: DEERE & COMPANY
1 John Deere Road
Moline, Illinois 61265 (US)

(72) Inventor: Frerich, Josef
Flurstrasse 6
W-6661 Dietrichingen (DE)
Inventor: Viaud, Jean
16, Rue de l'Ecole
F-57200 Sarreguemines (FR)

(74) Representative: Feldmann, Bernhard et al
DEERE & COMPANY European Office Patent
Department Steubenstrasse 36-42 Postfach
100862
W-6800 Mannheim 1 (DE)

EP 0 239 761 B1

## Description

This invention relates to a baling machine for forming cylindrical bales of crop having drivable feed rolls for advancing wrapping material for a completed bale, a cutting mechanism for the material downstream of the feed rolls which cutting mechanism includes a release lever shiftable from, and to, a release position, and a travelling member movable by a said feed roll over a distance dependent on the number of rotations of the roll from an inoperative position to an operative position in which the travelling member triggers cutting action of the cutting mechanism.

Machines, towed by a tractor, for forming large cylindrical bales of hay (so called "round balers") are well known. As the machine advances, the crop is removed from a windrow by a pick-up mechanism and delivered rearwardly to a baling chamber where it is rolled into a bale.

In one basic widely known form of such machines, the baling chamber is defined by runs of driven belts which move outwardly to enlarge the chamber to accommodate the bale as it grows in size. The hay is caused to roll round upon itself into a core and the core rotates about its horizontal axis and finally a completed bale is formed, the chamber being fed throughout with hay. The fully formed bale is tied with twine to maintain its shape and is discharged through a gate formed by a rear portion of the machine.

Another form of round baler has been proposed in GB-A-2 128 542. This has a fixed volume baling chamber defined by rolls and belts. Plastic foil is used instead of twine to wrap the completed bale and this material, as a roll, is located at the front or top of the machine and the material is passed through the nip of a pair of feed rolls and then, after passing a knife, runs between neighbouring fixed-position baling chamber rolls into the baling chamber where it is trapped between the outer surface of the bale and the baling chamber rolls so that it is carried round with the rotating bale and hence wraps round the bale. It is suggested that some form of automatic device could control both the number of revolutions of the rolls advancing the material and the action of the knife, although no details are proposed.

In DE-A-3 418 681 there is disclosed an apparatus with features set out in the opening paragraph of the present specification. In particular, a feed roll for wrapping material drives a "swinging member" or arm through a crank lever. The arm carries a ratchet wheel which (in the non-released condition of a cutting mechanism) is in mesh with a release segment which in turn is connected into a system of spring loaded levers on which the knife of the cutting mechanism is mounted. The release segment is driven until it comes out of mesh with the ratchet wheel. This allows the system of spring levers to collapse and the knife is forced against the wrapping material to sever it.

Thus the apparatus of DE-A-3 418 681 is complex, and therefore costly and open to potential difficulties in operation.

The present invention concerns a baler having a simple arrangement for controlling the cutting of wrapping material for a bale. Thus the apparatus can be robust and more reliable.

According to the present invention the travelling member is mounted on a wheel so that, upon rotation of the wheel, the travelling member is moved against the release lever at the operative position to shift the release lever to its release position, the wheel being a worm wheel driven, via a worm gear, by the said feed roll.

Embodiments of the invention will now be described with reference to the accompanying diagrammatic drawings in which :

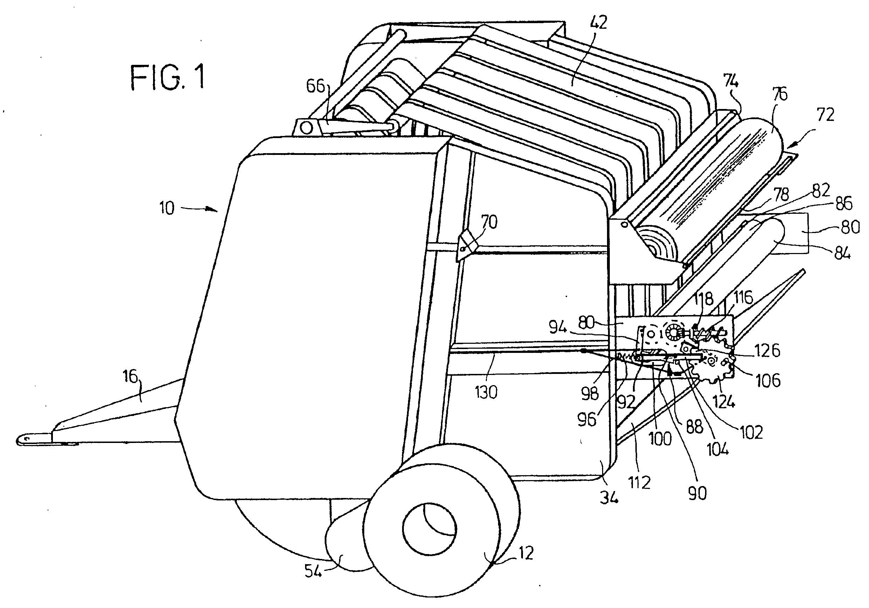

Fig. 1      is a perspective view of the left hand side and rear of a machine of the present invention for forming large cylindrical bales of hay (with some items omitted) including apparatus for wrapping a completed bale with net ;

Fig. 2      is a view of the machine from the left showing details within the machine ; and

Fig. 3      is an enlarged view of the wrapping apparatus of Fig. 1, shown during wrapping.

In the drawings, the baler includes a main frame 10 mounted on a pair of wheels 12. The main frame has on either side an upright fore-and-aft extending wall 14 connected by transverse beams (not shown). A draft tongue 16 is connected to a transverse beam at the front of the frame 10 and extends forwardly for attaching the baler to a tractor (also not shown) which draws the machine.

A plurality of lateral rolls extends over the width of the machine. One set of rolls 18, 20, 22, 24, 26 is journalled in the side walls 14, whilst another set consisting of rolls 28, 30, 32 is journalled in a swingable gate 34. There is also a pair of chamber restricting rolls 36, 38 and two belt take-up rolls 40, 41.

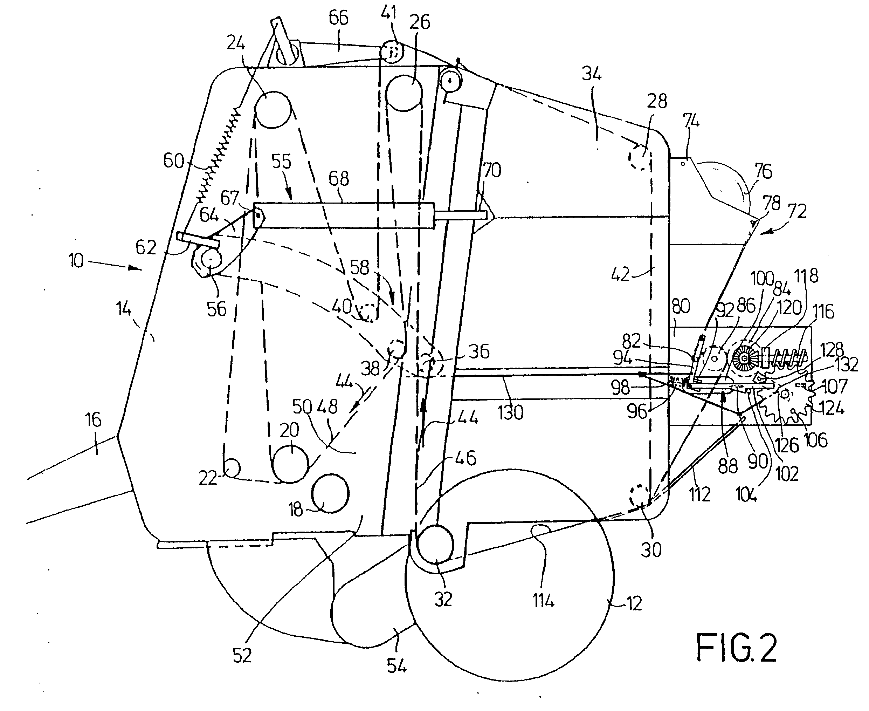

Six rubber belts 42 are trained side-by-side over the rolls, with the exception of the roll 18 which acts as a stripper roll, to provide the configuration shown and they move in the direction indicated by arrows 44, the stripper roll 18 being driven clockwise as viewed in Fig. 2. However, alternate belts only are trained over the lower foremost roll 22, whilst the remaining belts by-pass this roll, to provide a staggered array which is of no significance in relation to the present invention but which is described in our co-pending European patent application 82106409. Upwardly extending runs 46, 48 of the belts 42 define a bale-forming chamber 50 the ends of which are provided by the side walls 14 and gate 34 and which has an inlet 52 for crop received from a pick-up 54 beneath it.

In order to accommodate the increasing diameter of a growing bale core in the bale-forming chamber 50, the size of the chamber must also increase and a belt take-up and tensioning mechanism 55 is provided at either side of the machine. These mechanisms include : a pair of rearwardly extending idler arms which are mounted rigidly at the forward end of the main frame 10 on a horizontal transverse shaft 56, providing a pivot connection for the arms, and of which the right hand arm 58 only is shown ; the belt take-up roll 40 which is supported at either end at an intermediate location on the arms 58 ; and the pair of chamber restricting rolls 36, 38 supported at the free ends of the arms. The arms are biased in a clockwise direction (in Fig. 2) by a pair of springs, one on either side of the main frame 10, of which only the right hand spring 60 is shown and only its arrangement will be described, the other being similar. The spring 60 is connected at its lower end by a post 62 to a lever portion 64 of the arm 58, the portion 64 being rigid with the pivot shaft 56, and at its upper end to one arm of a bell crank 66 the other arm of which bears one end of the take-up roll 41.

The free end of the lever portion 64 is pivotally connected at a point 67 to the cylinder of a piston and cylinder unit 68, loading the arm 58, of which the piston is in turn pivotally connected to the gate 34 at a point 70, a similar arrangement being provided also on the left hand side of the machine (although it is possible to use a single unit 68 only). Thus the piston and cylinder unit 68 also forms part of the belt take-up and tensioning mechanism 55.

As described thus far the baler is conventional.

On the back of the gate 34 and below it, there is mounted apparatus 72 for wrapping a completed bale with net which serves to maintain the form of the cylindrical bale. This apparatus 72 includes a trough-shaped holder 74 extending across the width of the gate 34 and containing a roll of net 76. An idler roll 78 is disposed along the outlet of the holder and the net trained over it. A pair of brackets 80 is arranged below the holder 74 and the brackets carry between them a further idler roll 82 and a pair of side-by-side feed rolls 84, 86 of which the roll 86 (and thence the roll 84) is driven by an electric or hydraulic motor (not shown). The net passes over the idler roll 82 and through the nip of the feed rolls 84, 86 by which it is gripped.

A cutting mechanism 88 is mounted on the brackets 80 below the feed rolls 84, 86 to receive the net 76 therefrom and includes a horizontal knife 90 on the rearward side of the net and a hammer 92, on the gate side of the net, which is pivotally mounted on the brackets 80 by upwardly extending posts 94. The hammer 92 is loaded by a spring 96 bearing at one end against the hammer and at the other against an abutment 98. The ends of the hammer 92 are received in a slot 100 in either bracket 80 and are pivotally connected to a release lever 102 on the outward face of either bracket, the release lever having a shoulder on its underside in contact with an abutment pin 104. A travelling member in the form of a lift peg 106 is disposed so that it can move from an inoperative (or "home") position against an adjustable stop 107 on the associated bracket 80 to an operative position against the underside of the release lever 102 to raise it.

Below the brackets 80 there is a guide plate 112 which slopes forwardly and downwardly, and extends in close proximity to the underside of the belts in a run 114 between the rolls 30 and 32 finally terminating in an upturned end portion which follows the path of the belts to the inlet 52 of the baling chamber 50. The guide plate 112 is positioned to receive net which has passed through the cutting mechanism 88 and to press the net against the belt run 114 to advance it.

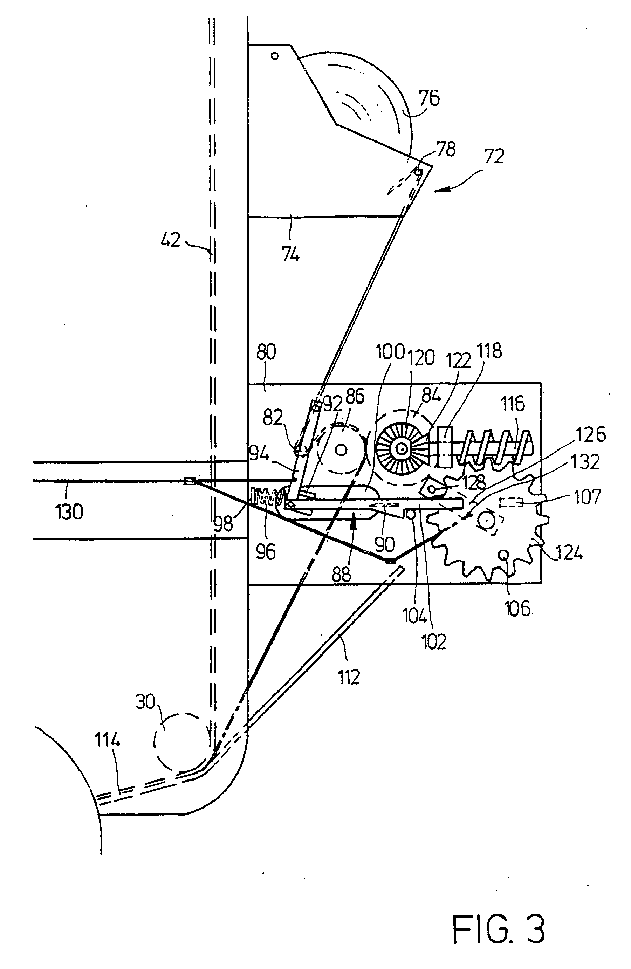

Returning now to the arrangement for causing movement of the lift peg 106, a worm gear 116 is mounted horizontally by a support 118 on the outer face of the left hand bracket 80, and is driven by the roll 84 via a bevel gear 120 on the end of the roll which meshes with a bevel gear 122 on the worm gear 116. Alternatively the bevel gear 120 can be driven directly by the motor for the roll 86. In turn the worm gear 116 is in mesh (in the position shown in Fig. 3) with a worm wheel 124 below it which is mounted at the lower end of an arm 126 which is swingable about a pivot pin 128 at its upper end and which is spring-loaded toward the mesh position. The worm wheel 124 itself is also spring-loaded for anti-clockwise movement. The lift peg 106 is mounted on this worm wheel 124 so that it projects from both faces thereof. A cable 130 is attached at one end to an intermediate point 132 on the arm 126 and at the other end to a fixed location on the left hand side wall 14. A branch of the cable also runs to the left hand post 94. In the position (in Fig. 3) in which the gate 34 is closed, the cable 130 is slack and does not affect the disposition of the arm 126 and the post 94.

In operation, hay lying in a windrow is lifted and conveyed to the baling chamber 50 where the oppositely moving runs 46, 48 of the belts 42 cause the crop to turn clockwise (as viewed in Fig. 2) so as to form a bale core of increasing size which eventually overcomes the tension in the belts brought about by the belt take-up and tensioning mechanisms, and the idler arms 58 consequently swing upwardly, the piston and cylinder units 68 expanding, and thus the chamber 50 increases in size until a full-sized bale has been formed. The operation of baling so far described is conventional.

The bale is then wrapped with net using the apparatus 72. With crop still being fed to the baling chamber 50 and the bale still rotating, the motor for the feed roll 86 is triggered, by means of a switch (not shown) which is sensitive to a predetermined position of the idler arms 58 corresponding to the required fullsize bale, to drive the feed roll 86 and hence to advance the net 76 of which the end is, at this stage, level with the knife 90. The net is propelled to the guide plate 112, slides along the plate and reaches the bite between the roll 30 and belts 42 on the one hand and the plate 112 on the other where it is gripped and further advanced by the belt run 114. Finally the net 76 reaches the upturned end portion of the plate 112 and thus enters the baling chamber 50 where it is carried round with the bale.

When three quarters of the circumference of the bale has been wrapped by the net the flow of hay to the baling chamber is stopped. This can be brought about, for example, by an electrically operated dog clutch (not shown) triggered automatically by a counter meter and connected in a drive line to the pick-up 54, only the pick-up being stopped.

By the completion of wrapping it is desirable to have two full turns of net 76 on the bale so that there is entire overlap of the net, but at the same time to avoid wastage due to having excess net. Wrapping is continued after shut-off of the pick-up 54 until such time as the length of net downstream of the cutting mechanism 88 measures twice the circumference of the bale. This is metered as follows.

Turning to the wrapping apparatus of Fig. 3, when the motor for the feed rolls 84, 86 is triggered to operate as described above, the worm gear 116, and hence the worm wheel 124, will be driven by the roll 84 thereby causing the lift peg 106 to move from its inoperative position. The anti-clockwise revolutions of the roll 84 translate into much reduced clockwise turning motion of the worm wheel 124 (against its spring loading) arranged such that the lift peg 106 reaches its operative lifting position in contact with the underside of the release lever 102 at precisely the time that two full turns of net 76 have been advanced from the feed rolls 84, 86 and cutting mechanism 88. The peg 106 lifts the release lever 102 free of the abutment pin 104 and instantly the hammer 92 is impelled by the action of the spring 96 toward the knife 90 thereby cutting the net 76 therebetween. At the same time the hammer 92 triggers cut-off of the feed roll motor.

The bale continues to turn and the remainder of the cut net is drawn into the chamber 50 to wrap round the bale to complete the double wrap. The belts 42 are stopped, the gate 34 raised by the cylinder units 68, and the wrapped bale is deposited on the ground. Opening of the gate 34 results in the cable 130 becoming taut and then pulling the arm 126 and the post 94, to which it is connected, in a frontward direction. The effect of this is to re-set the release lever 102 into abutment with the pin 104 and to disengage the worm wheel 124 from meshing with the worm gear 116. Once thus free, the worm wheel 124 turns under its spring loading in an anti-clockwise direction and thus the lift peg 106 is returned from its operative to its inoperative position where it comes into abutment with the adjustable stop 107 against further anti-clockwise movement. Since the distance, between the adjustable stop 107 and the underside of the release lever 102, which is travelled by the lift peg 106 is a measure of the length of net advanced for wrapping a completed bale, it is simple to allow for different sizes of bale by adjusting the position of the stop 107 in accordance with bale size.

The gate 34 is closed and baling can start once more.

## Claims

1. A baling machine for forming cylindrical bales of crop having drivable feed rolls (84, 86) for advancing wrapping material (76) for a completed bale, a cutting mechanism (88) for the material (76) downstream of the feed rolls (84, 86) which cutting mechanism (88) includes a release lever (102), shiftable from, and to, a release position, and a travelling member (106) movable by a said feed roll (84) over a distance dependent on the number of rotations of the roll (84) from an inoperative position to an operative position in which the travelling member (106) triggers cutting action of the cutting mechanism (88) characterised in that the travelling member (106) is mounted on a wheel so that, upon rotation of the wheel, the travelling member (106) is moved against the release lever (102) at the operative position to shift the release lever (102) to its release position, the wheel being a worm wheel (124) driven, via a worm gear (116), by the said feed roll (84).

2. A baling machine according to claim 1 characterised in that the cutting mechanism (88) has a spring loaded hammer (92), and a knife (90) against which the wrapping material (76) can be forced by the hammer (92) on said shifting of the release lever (102).

3. A baling machine according to claim 1 or 2 characterised in that the travelling member is a peg (106) arranged to contact an adjustable abutment (107) at the inoperative position.

4. A baling machine according to any preceeding claim characterised in that the worm wheel (124) is spring loaded toward turning to bring the travelling member (106) to its inoperative position and is movable out of engagement with the worm gear (116) to free the worm wheel (124) for said turning.

5. A baling machine according to claim 4 characterised in that the worm wheel (124) is mounted on a swing-

EP 0 239 761 B1

able arm (126), the arm (126) is connected by a line (130) to a fixed part of the machine, and the cutting mechanism (88) is mounted on a bale discharge gate (34) which is swingable upwardly for opening so that on opening of the gate (34) the line (130) pulls the worm wheel (124) out of engagement with the worm gear (116).

## Patentansprüche

1. Ballenformmaschine zum Formen von zylindrischen Ballen aus Erntegut mit antreibbaren Zuführungswalzen (84, 86) zum Vorwärtsbewegen von Umhüllungsmaterial (76) für einen vervollständigten Ballen, mit einem Schneidmechanismus (88) für das Material (76) stromabwärts von den Zuführungswalzen (84, 86), welcher Schneidmechanismus (88) einen von einer und in eine Freigabestellung schwenkbaren Freigabehebel (102) aufweist, und mit einem Wanderglied (106), das durch eine der genannten Zuführungswalzen (84) über eine Distanz bewegbar ist, die von der Zahl der Umdrehungen der Walze (84) aus einer unwirksamen Stellung in eine Arbeitsstellung abhängt, in der das Wanderglied (106) den Schneidvorgang des Schneidmechanismus (88) auslöst, dadurch gekennzeichnet, daß das Wanderglied (106) auf einem Rad so montiert ist, daß bei einer Drehung des Rades das Wanderglied (106) bei der Arbeitsstellung gegen den Freigabehebel (102) bewegt wird, um den Freigabehebel (102) in seine Freigabestellung zu verstellen, wobei das Rad ein Schneckenzahnrad (124) ist, das über eine Schnecke (116) von der genannten Zuführungswalze (84) angetrieben wird.

2. Ballenformmaschine nach Anspruch 1, dadurch gekennzeichnet, daß der Schneidmechanismus (88) einen durch Feder belasteten Hammer (92) und ein Messer (90) aufweist, gegen das das Umhüllungsmaterial (76) durch den Hammer (92) bei dem Verstellen des Freigabehebels (102) gezwungen werden kann.

3. Ballenformmaschine nach Anspruch 1 oder 2, dadurch gekennzeichnet, daß das Wanderglied ein Zapfen (106) ist, der so angeordnet ist, daß er in der unwirksamen Stellung an einem einstellbaren Anschlag (107) anliegt.

4. Ballenformmaschine nach irgendeinem der voranstehenden Ansprüche, dadurch gekennzeichnet, daß das Schneckenzahnrad (124) in der Drehung vorgespannt, in der das Wanderglied (106) in seine unwirksame Stellung gelangt, und außer Eingriff mit der Schnecke (116) bringbar ist, um das Schneckenzahnrad (124) für die genannte Drehung freizugeben.

5. Ballenformmaschine nach Anspruch 4, dadurch gekennzeichnet, daß das Schneckenzahnrad (124) auf einem schwenkbaren Arm (126) montiert ist, der Arm (126) durch ein Kabel (130) oder dergleichen mit einem festen Teil der Maschine verbunden ist und daß der Schneidmechanismus (88) auf einem zum Entladen des Ballens dienenden Tor (34) montiert ist, welches zum Öffnen nach oben schwenkbar ist, so daß auf das Öffnen des Tores (34) hin das Kabel (130) oder dergleichen das Schnekkenzahnrad (124) außer Eingriff mit der Schnecke (116) zieht.

## Revendications

1. Machine de mise en balles servant à former des balles cylindriques d'une récolte et comportant des rouleaux débiteurs (84, 86) pouvant être entraînés, servant à faire avancer un matériau d'enveloppement (76) pour une balle terminée, un mécanisme de coupe (88) servant à découper le matériau (76) en aval des rouleaux débiteurs (84, 86), ce mécanisme de coupe (88) comprenant un levier de libération (102), qui est déplaçable à partir et en direction d'une position de libération, et un élément mobile (106) déplaçable par l'un desdits rouleaux débiteurs (84) sur une distance qui dépend du nombre de rotations du rouleau (84), depuis une position inactive à une position active, dans laquelle l'élément mobile (106) déclenche l'action de coupe du mécanisme de coupe (88), caractérisée en ce que l'élément mobile (106) est monté sur une roue de sorte que, lors de la rotation de cette roue, l'élément mobile (106) est amené, à l'encontre du levier de libération (102), dans la position active afin de placer le levier de libération (102) dans sa position de libération, la roue étant une roue-vis (124) entraînée par ledit rouleau débiteur (84) par l'intermédiaire d'une transmission à vis sans fin (116).

2. Machine de mise en balles selon la revendication 1, caractérisée en ce que le mécanisme de coupe (88) possède un marteau (92) chargé par un ressort, et un couteau (90), contre lequel le matériau d'enveloppement (76) peut être appliqué à force par le marteau (92) lors dudit déplacement du levier de libération (102).

3. Machine de mise en balles selon la revendication 1 ou 2, caractérisée en ce que l'élément mobile est un téton (106) agencé de manière à venir en contact avec une butée réglable (107), dans la position inactive.

4. Machine de mise en balles selon l'une quelconque des revendications précédentes, caractérisée en ce que la rou-vis (124) est sollicitée par un ressort de manière à tourner afin d'amener l'organe mobile (106) dans sa position inactive et peut être dégagée de la transmission à vis sans fin (107) de manière à libérer la roue-vis (124) pour ladite rotation.

5

5. Machine de mise en balles selon la revendication 4, caractérisée en ce que la roue-vis (124) est montée sur un bras oscillant (126), le bras (126) est raccordé par une tringle (130) à une partie fixe de la machine, et le mécanisme de coupe (88) est monté sur une porte (34) de déchargement de la balle, qui peut basculer vers le haut dans sa position ouverte de sorte que, lors de l'ouverture de la porte (34), la tringle (130) dégage la roue-vis (124) de la transmission à vis sans fin (116).

FIG.1

FIG.2

FIG. 3